# EUROPEAN PATENT APPLICATION

(11) **EP 4 464 599 A1**
(43) Date of publication of application: **20.11.2024**
(21) Application number: 24174196.6
(22) Date of filing: 03.05.2024
(51) Int. Cl.: B64D 11/06, B60Q 3/44, B60Q 3/76, B64D 11/00

(54) **READING LIGHT WITH MOTION CONTROLLER FOR COORDINATED SEAT MOVEMENT**

(30) Priority: 05.05.2023 IN 202311032051; 08.11.2023 US 202318388049
(71) Applicant: B/E Aerospace, Inc., Winston-Salem, NC 27105 (US)
(72) Inventor: KAPPA VENKATA, Suresh Babu, 560049 Bengaluru (IN); ANNUMANDLA, Srikanth, 500019 Hyderabad (IN); BAUER, Brandon, Winston-Salem, 27106 (US)
(74) Representative: Dehns

(57) **Abstract**

A reading light assembly (102) for a passenger seat (202). The reading light assembly (102) includes a light source (104), a drive mechanism (106), a driven mechanism (108) coupled to the drive mechanism and the light source configured to change the angle of the light source, and a motion controller (110) configured to be communicatively coupled to a seat controller (120) for controlling a seat pan actuator (114). In use, the motion controller (110) is configured to coordinate operation of the drive mechanism with movement of the seat pan actuator, such that the such that the light source follows motion of the passenger seat. A passenger seat system including an adjustable passenger seat (202) and the reading light assembly (102).

## Description

### TECHNICAL FIELD AND BACKGROUND

The present disclosure relates generally to passenger seats and associated amenities, and more particularly, to a reading light assembly including a motion controller configured to communicate with a seat controller to coordinate reading light motion with seat movement.

Aircraft and other conveyances include amenities for use by seated passengers. Common seat amenities include entertainment devices, deployable tables, climatization systems, and lighting, among others. Seat lighting can include one or more of safety, mood, environment, and task lighting.

Reading lights are a type of task lighting typically positioned in the ceiling to illuminate objects from above. In economy seating classes, reading lights may be provided in passenger service units positioned overhead and within reach and handling of passengers. In business and premium seating classes, reading lights may be positioned overhead, behind the seat, or to one side of the seat, depending on the seat environment and surrounding furniture.

The adjustment capabilities of some passenger seats require reading light adjustment to maintain the illumination area. One conventional approach utilizes non-movable lighting subsets each assigned to a different seat position such that a first seat position corresponds to a first subset and a second seat position corresponds to a second subset. A vision-based sensor positioned above the seat operates to determine the position of the backrest such that a lighting controller activates the correct lighting subset based on the determined seat position. Another solution utilizes an external vision-based sensor to determine the seat position, and from the determined position causes the lighting assembly to adjust as needed.

While conventional approaches are able to adjust illumination according to a changed seat position, none are able to follow the seat motion as it occurs. Further, conventional approaches require the use of external sensors which increase the cost and complexity of the systems, complicate the seating environment, and are not able to accommodate every seating environment.

Accordingly, what is needed is a reading light tracking solution that overcomes the disadvantages of the prior art.

### BRIEF SUMMARY

In one aspect, the invention is directed to a reading light assembly for a passenger seat. In embodiments, the reading light assembly includes a light source, a drive mechanism, a driven mechanism coupled to each of the drive mechanism and the light source configured to change the angle of the light source, and a motion controller configured to be communicatively coupled to a seat controller configured to control a seat pan actuator. In use, the motion controller is configured to coordinate operation of the drive mechanism with movement of the seat pan actuator, such that the light source follows the motion of the passenger seat.

In some embodiments, the drive mechanism is an electric motor including a rotating shaft, and the driven mechanism includes a Scotch-yoke mechanism.

In some embodiments, the Scotch-yoke mechanism includes a driven gear rotationally coupled to a driving gear coupled to the rotating shaft of the electric motor, and a reciprocating member coupled at one end to a gimbal coupled to the light source, the gimbal configured to rotate the light source about at least one axis.

In some embodiments, the motion controller of the reading light assembly is configured to adjust a rotational speed of the electric motor according to an operating speed of the seat pan actuator, and adjust a rotational direction of the rotating shaft of the electric motor according to an operating direction of the seat pan actuator.

In some embodiments, the motion controller is configured to adjust an angle of the light source automatically in response to motion of the seat pan actuator.

In some embodiments, the reading light assembly is configured to be positioned above the passenger seat.

In another aspect, the invention is directed to a passenger seat system that includes an adjustable passenger seat including a seat pan actuator and a seat controller communicatively coupled to the seat pan actuator. The system further includes a reading light assembly including a light source, a drive mechanism, a driven mechanism coupled to the drive mechanism and the light source configured to change the angle of the light source, and a motion controller communicatively coupled to the seat controller. In use, the motion controller is configured to coordinate operation of the drive mechanism with movement of the seat pan actuator, such that the light source follows motion of the passenger seat.

This summary is provided solely as an introduction to subject matter that is fully described in the following detailed description and drawing figures. It is to be understood that both the foregoing summary and the following detailed description are explanatory only and the scope of the invention is as defined by the claims.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a block diagram illustrating a system for coordinating light assembly tracking motion with passenger seat motion, in accordance with example embodiments of this disclosure; and
FIG. 2 is a schematic illustration of a reading light assembly with tracking capability for use with an adjustable passenger seat, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a reading light assembly configured with a drive mechanism configured to be communicatively coupled with a seat motion controller such that light movement and seat movement may be coordinated. In use, the reading light is configured to adjust, for instance rotate, to follow the motion of an associated adjustable passenger seat such that the illumination area moves as the seat transitions between different seating positions. The reading light assembly is configured to communicate directly with the seat controller to coordinate reading light adjustment with actuator motion, for instance seat pan actuator motion, such that reading light adjustment occurs automatically with seat motion. In embodiments, the tracking feature of the reading light assembly may be activated or deactivated according to passenger preference. Advantages and benefits of the disclosed systems and assemblies include, but are not limited to, an adjustable reading light compatible for use with various different types of adjustable seats, the ability to customize the tracking motion, the ability to activate and deactivate the tracking feature, and a system that obviates the need for separate sensors for determining the seat position.

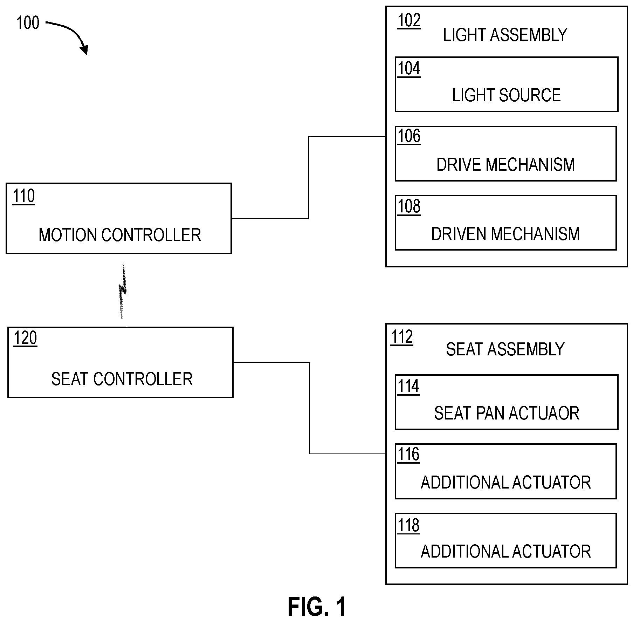

FIG. 1 is a block diagram illustrating a passenger seat system 100 according to the present disclosure. The system 100 includes a reading light assembly 102 generally including a light source 104, a drive mechanism 106, and a driven mechanism 108. The light source 104 includes at least one light configured to illuminate an area associated with a passenger seat, for instance illuminate objects from above the seat. The drive mechanism 104 is configured to initiate motion in the assembly. The driven mechanism 108, coupled between the light source 104 and the drive mechanism 106, is configured to be moved by the drive mechanism 108 to impart movement of the light source 104 to adjust the angle of the light source.

The seat system 100 further includes a motion controller 110 associated with the reading light assembly 102. The motion controller 110 may be integrated with the reading light assembly 102 or positioned remotely and communicatively coupled thereto. As shown, the motion controller 110 is communicatively coupled with a seat controller 120, which in turn is communicatively coupled to actuators of a passenger seat assembly 112. Each of the motion controller 110 and the seat controller 120 may be electrically coupled to its respective assembly. In some embodiments, the motion controller 110 and the seat controller 120 may be components of the same device.

The motion controller 110 and the seat controller 120 are each configured to receive inputs and generate outputs. For example, the motion controller 110 is configured to receive inputs from the passenger to activate or deactivate the tracking feature of the light assembly 102, receive inputs from the seat controller 120 related to seat actuator activity, and output commands to the reading light assembly 102. The seat controller 120 is configured to receive inputs from the passenger related to predefined seat adjustments and output commands to the passenger seat assembly 112 to effect the selected seat adjustments.

Each controller 110, 120 may include at least one processor, memory, and a communication interface. The processor provides processing functionality for at least the controller and may include any number of processors, micro-controllers, circuitry, field programmable gate array (FPGA) or other processing systems, and resident or external memory for storing data, executable code, and other information accessed or generated by the controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the controller/processor, such as software programs and/or code segments, or other data to instruct the processor, and possibly other components of the controller, to perform the functionality described herein. Thus, the memory can store data, such as a program of instructions for operating the controller, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the controller. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the controller and the processor. It should be noted that while the communication interface is described as a component of the controller, one or more components of the communication interface may be implemented as external components communicatively coupled to the controller via a wired and/or wireless connection. The controller may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

In embodiments, the passenger seat assembly 112 includes physical seat components such as a seat pan, backrest, leg rest, armrests, etc. Each physical seat component may be independently adjustable, or component adjustments may be grouped, sequentially activated, or otherwise coordinated. Adjustments may include individual component adjustments and coordinated transitions between predefined sitting positions. For example, the passenger seat may be configured to adjust between an upright sitting position for taxi, takeoff, and landing (TTOL), and a lie-flat sleeping position during flight, through various intermediate sitting positions.

The passenger seat is equipped with one or more actuators depending on the adjustment capabilities of the seat. For example, premium economy class seats may include one or two actuators whereas premium class seats such as super-first class seats may include a dozen or more actuators providing from 2 to n degrees of freedom. In some embodiments, an adjustable passenger seat may include an independent seat pan actuator 114 configured to drive seat pan motion, and at least one dependent actuator configured to drive another component motion, for instance a dependent actuator 116 for driving leg rest motion and at least one further dependent actuator 118 for driving backrest motion. In embodiments, each actuator may be configured to provide one or more or translational and rotational motions to cause a position change in a physical seat component.

In some embodiments, the seat controller 120 is configured to receive passenger inputs as well as outputs from microcontrollers associated with each of the seat actuators. The microcontrollers are configured to activate the actuators, keep track of the actuator positions, and report to the seat controller 120. The seat controller 120 maintains position data for each of the adjustable components (e.g., seat pan, backrest, leg rest, headrest, armrests, lumbar, etc.) such that the actuators can be activated to move seat components to positions corresponding with a predefined sitting position.

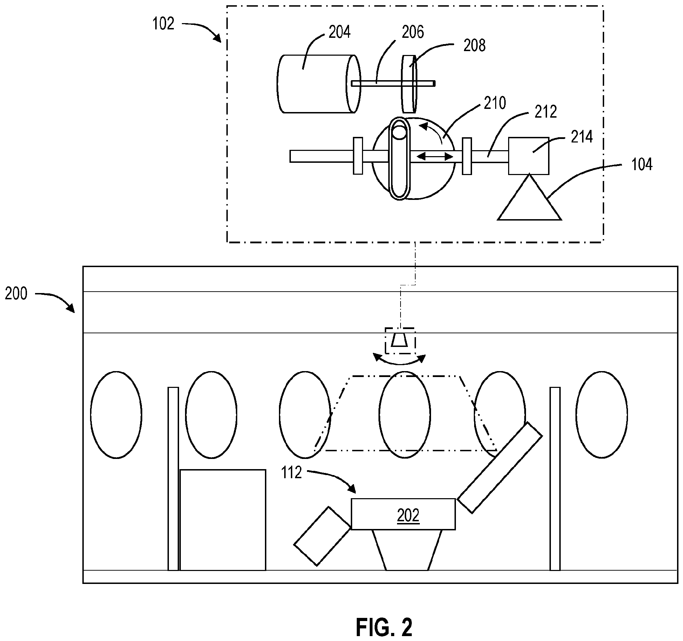

FIG. 2 is a schematic diagram illustrating the seat system implemented in an aircraft. As shown, the passenger seat assembly 112 is positioned in an aircraft passenger cabin 200, for instance a business seating class considering the adjustment capabilities of the passenger seat 202. The reading light assembly 102 is positioned overhead of the passenger seat 202 such that objects are illuminated from above and the illumination field includes most, if not all, of the passenger seat 202. In some embodiments, the reading light assembly 102 is integrated in a passenger service unit further including additional devices such as crew communication devices, climatization devices, and indicator lights.

The reading light 104 is adjustable by the drive mechanism via the driven mechanism. In some embodiments, the drive mechanism includes an electric motor 204 having a rotating axial shaft 206. A toothed gear 208 coupled to the rotating shaft 206 is meshed with a toothed gear 210 associated with the driven mechanism. In some embodiments, the driven mechanism includes a Scotch-yoke mechanism configured to convert rotational motion to linear motion. In use, the toothed gear 208 drives rotation of the other toothed gear 210, which in turn converts rotational motion into linear motion through the Scotch-yoke mechanism. Via the mechanism, rotational motion is converted into reciprocating linear motion. The light source 104 is pivotally coupled to one end of the reciprocating member 212 such the linear motion in a first direction causes rotational motion of the light source 104 in a first direction (e.g., clockwise), and linear motion in a second direction, opposite the first direction, causes rotational motion of the light source 104 in a second direction opposite the first direction (e.g., counterclockwise). In some embodiments, the light source 104 is affixed to a gimbal 214 configured to rotate the light source 104 about at least one axis.

The motion controller 110 of the light assembly 102 is communicatively coupled to the seat controller 120 such that light motion can be coordinated with seat motion. In use, positional information associated with at least one of the seat actuators, for instance the seat pan actuator 114, is utilized by the motion controller 110 to determine the correct position of the light source 104. In some seat assemblies in which the seat pan and at least one of backrest and leg rest motions are coordinated, the seat pan actuator 114 may be the primary motion driver whereas the backrest and leg rest actuators may be secondary drivers. Thus, in use, adjustment begins with seat pan adjustment and adds backrest and leg rest adjustment as the motion continues.

The positional data of the seat pan actuator, communicated to the seat controller 120 via the seat pan actuator microcontroller, can be retrieved by the motion controller 110 to determine the corresponding position of the light source 104. For example, a seat pan actuator condition corresponding to taxi, takeoff and landing (TTOL) position of the seat may correspond to a forwardmost angling of the light source 104, whereas a seat pan actuator condition corresponding to a lie-flat position of the seat may correspond to an aftmost angling of the light source 104, whereas seat pan actuator conditions between TTOL and lie-flat may correspond to light source angles between forwardmost and aftmost. In embodiments, movement of the light source 104 is coupled with movement of a predetermined seat actuator such that light source 104 tracks with the seat motion to position the light where most desirable to the seat occupant, automatically.

In embodiments, the interface for selecting the predefined sitting positions and seat motions, for instance a touchscreen configured to display graphical elements, may include an input for turning on and off the tracking function in addition to an input for turning on and off and the light source 104.

From the above description, it is clear that the inventive concepts disclosed herein are well adapted to achieve the objectives and to attain the advantages mentioned herein as well as those inherent in the inventive concepts disclosed herein.

## Claims

1. A reading light assembly (102) for a passenger seat, comprising:
a light source (104);
a drive mechanism (106);
a driven mechanism (108) coupled to the drive mechanism and the light source, the driven mechanism configured to change the angle of the light source; and
a motion controller (110) configured to be communicatively coupled to a seat controller (120) for controlling a seat actuator (114), the motion controller configured to coordinate operation of the drive mechanism with movement of the seat actuator, such that the light source motion is coupled with passenger seat motion.

2. The reading light assembly (102) according to claim 1, wherein:
the drive mechanism (106) is an electric motor (204) including a rotating shaft (206); and
the driven mechanism (108) comprises a Scotch-yoke mechanism.

3. The reading light assembly (102) according to claim 2, wherein the Scotch-yoke mechanism comprises:
a driven gear (210) rotationally coupled to a driving gear (208) coupled to the rotating shaft (206) of the electric motor (204); and
a reciprocating member (212) coupled at one end to a gimbal (214) coupled to the light source (104), the gimbal configured to rotate the light source about at least one axis.

4. The reading light assembly (102) according to claim 2, wherein the motion controller (110) of the reading light assembly is configured to:
adjust a rotational speed of the electric motor (204) according to an operating speed of the seat actuator (114); and
adjust a rotational direction of the rotating shaft (206) of the electric motor (204) according to an operating direction of the seat actuator (114).

5. The reading light assembly (102) according to any preceding claim, wherein the seat actuator (114) is coupled to a seat pan.

6. The reading light assembly (102) according to any preceding claim, wherein the motion controller (110) is configured to adjust an angle of the light source (104) automatically in response to motion of the seat actuator (114).

7. The reading light assembly (102) according to any preceding claim, wherein the reading light assembly (102) is configured to be positioned above the passenger seat.

8. A passenger seat system, comprising:
an adjustable passenger seat (202) including a seat pan actuator (114);
a seat controller (120) communicatively coupled to the seat pan actuator (114); and
a reading light assembly (102) as claimed in any preceding claim.

9. A method of illuminating a passenger seat (202), comprising:
providing a passenger seat system comprising:
an adjustable passenger seat (202) including a seat actuator (114);
a seat controller (120) communicatively coupled to the seat actuator; and
a reading light assembly (102) comprising:
a light source (104);
a drive mechanism (106);
a driven mechanism (108) coupled to the drive mechanism and the light source, the driven mechanism configured to change the angle of the light source; and
a motion controller (110) communicatively coupled to the seat controller, the motion controller configured to coordinate operation of the drive mechanism with movement of the seat actuator;
wherein motion of the seat actuator causes the motion controller, via the drive mechanism and the driven mechanism, to change the angle of the light source.

10. The method according to claim 9, wherein:
the drive mechanism (106) is an electric motor (204) including a rotating shaft (206); and
the driven mechanism (108) comprises a Scotch-yoke mechanism.

11. The method according to claim 10, wherein the Scotch-yoke mechanism comprises:
a driven gear (210) rotationally coupled to a driving gear (208) coupled to the rotating shaft of the electric motor (204); and
a reciprocating member (212) coupled at one end to a gimbal (214) coupled to the light source (104), the gimbal configured to rotate the light source about at least one axis.

12. The method according to claim 11, wherein the motion controller (110) of the reading light assembly (102) is configured to:
adjust a rotational speed of the electric motor (204) according to an operating speed of the seat actuator (114); and
adjust a rotational direction of the rotating shaft (206) of the electric motor according to an operating direction of the seat actuator.

13. The method according to claim 9, 10, 11 or 12, wherein the motion controller (110) is configured to adjust the angle of the light source (104) automatically in response to motion of the seat actuator (114).
